# EUROPEAN PATENT APPLICATION

(11) **EP 4 796 508 A1**
(43) Date of publication of application: **26.08.2026**
(21) Application number: 26160242.9
(22) Date of filing: 24.02.2026
(51) Int. Cl.: C03C 1/00, C03C 3/087, C03C 3/097, C03C 13/06, C03C 25/25, C03C 25/26

(54) **CONTINUOUS BASALT FIBERS FROM HYALOCLASTITE AND METHOD OF MAKING AND USING SAME**

(30) Priority: 25.02.2025 US 202563762688 P
(71) Applicant: Greencraft LLC, Norcross, GA 30093 (US)
(72) Inventor: Ciuperca, Romeo Illarian, Atlanta (US)
(74) Representative: Thurston, Joanna

(57) **Abstract**

The invention comprises a method of making continuous basalt fibers. The method comprises delivering a natural mineral from one or more of hyaloclastite, volcanic glass, volcanic ash, or lava quenched by water of a basaltic, intermediate basaltic or andesitic chemical composition, melting the mineral and extruding the molten material into a continuous fiber.

## Description

### FIELD OF THE INVENTION

The present invention generally relates to a manufacturing process for making basalt fibers such as continuous basalt fibers (CBF) and short basalt fibers. The present invention relates to a manufacturing process for continuous basalt fibers that requires less energy and thereby reduced amounts of CO₂ emissions while producing a fiber with improved properties.

### BACKGROUND OF THE INVENTION

Basalt fibers are produced from basalt rocks by melting the rock and converting the melt into fibers. Basalts are rocks of igneous origin. The main energy consumption for the preparation of basalt raw materials to produce of fibers is made in natural conditions. Basalt continuous, staple and super-thin fibers are produced and used. Basalt continuous fibers (BCF) are used to produce reinforcing materials and composite products, fabrics and non-woven materials. Basalt staple fibers are used to produce thermal insulation materials. Basalt superthin fibers (BSTF) are used to produce high-quality heat and sound insulating and fireproof materials. The technology to produce basalt continuous fiber (BCF) may be a one-stage process: melting, homogenization of basalt and extraction of fibers, or two stage process: where first basalt is melted at a high temperature and then cooled to a lower temperature to extract fibers. Further processing of BCF into materials is carried out using "cold technologies" with low energy costs.

The chemical composition and mineral content of basalt varies considerably. For applications such as tiles, stone castings or staple fibers, basalt with a wide range of properties can be used. However, for production of continuous basalt fibers (CBF), the prior art requirements become much more stringent and only a narrow range of basalt chemical composition can be used to make CBF. With these strict requirements for composition and mineral content, the list of possible basalt mines in the world becomes very short. Today, major manufacturers of CBF are known to use raw material from mines in western Ukraine or Georgia, consisting of andesitic basalts with SiO₂ content of more than 50% by weight.

Basalt fiber is generally made from a single material, crushed basalt, from a carefully chosen quarry source. Basalt of high acidity (over 46% silica content) and low iron content is considered desirable for fiber production. Unlike other composites, such as glass fiber, essentially no materials are added during its production. The basalt is simply washed and then melted. The manufacture of basalt fiber requires the melting of the crushed and washed basalt rock at about 1,500 °C (2,730 °F). The molten rock is then extruded through small nozzles to produce continuous filaments of basalt fiber. The basalt fibers typically have a filament diameter of between 10 and 20 µm which is far enough above the respiratory limit of 5 µm to make basalt fiber a suitable replacement for asbestos. They also have a high elastic modulus, resulting in high specific strength-three times that of steel. Thin fiber is usually used for textile applications mainly for production of woven fabric. Thicker fiber is used in filament winding, for example, for production of compressed natural gas (CNG) cylinders or pipes. The thickest fiber is used for pultrusion, geogrid, unidirectional fabric, multiaxial fabric production and in form of chopped strand for concrete reinforcement. One current application for continuous basalt fiber is the production of basalt rebar that substitutes for traditional steel rebar in construction markets.

The mineral feed can be melted in a furnace that can be a gas or other type fuel burning furnace or an electric arc furnace. Regardless of the type of furnace used to melt the mineral feed the rest of the basalt fiber manufacturing process steps are generally similar.

Currently, the natural minerals used in the prior art basalt fiber manufacturing process are crystalline in nature, such as crystalline basalt, specifically andesitic basalt, as well as being geologically weathered due to the age of the mineral formation. A crystalline mineral has a higher melting point when compared with an amorphous mineral or a partially amorphous mineral with similar chemical composition, and as a result it requires a higher temperature and a longer time in the melting furnace. Additionally, older mineral formations are weathered or altered where the iron contained in crystalline basalt is oxidized iron contained in a macro crystal usually as magnetite, hematite or ferrite (or weathered olivine or hornblende) and resulting in a relatively high melting point.

It would therefore be desirable to provide a continuous basalt fiber and process for making the same that uses a wider range of starting materials. Additionally, it would be desirable to provide a process for making continuous basalt fibers that is more energy efficient and results in relatively lower CO₂ emissions.

### SUMMARY OF THE INVENTION

The present invention satisfies the foregoing needs by providing improved continuous basalt fibers and an improved process for making continuous basalt fibers.

In a disclosed embodiment, the present invention comprises a basalt fibers manufacturing process using a basaltic hyaloclastite or intermediate basaltic hyaloclastite mineral. Preferably the basaltic hyaloclastite or intermediate basaltic hyaloclastite useful in the present invention comprises approximately 30 to approximately 57 percent by weight SiO₂, approximately 10% to approximately 18% by weight Al₂O₃, approximately 8% to approximately 18% by weight Fe₂O₃, and approximately 4% to approximately 25% by weight CaO and preferably wherein the sum of the Al₂O₃ + Fe₂O₃ is between approximately 20% to approximately 35% by weight, preferably wherein the ratio between the Al₂O₃ and the Fe₂O₃ is approximately 0.75 and approximately 1.50 ideally or approximately 1 and the ratio between the SiO₂ and the sum of the Al₂O₃ + Fe₂O₃ is preferably between approximately 1.25 and 2.25, ideally approximately 1.5.

In another disclosed embodiment, the present invention comprises a basaltic hyaloclastite or intermediate basaltic hyaloclastite mineral comprising at least 30% by weight amorphous content.

In another disclosed embodiment, the present invention comprises a basaltic hyaloclastite or intermediate basaltic hyaloclastite mineral from one or more of hyaloclastite, lava quenched by water, volcanic ash, scoria or pumice mineral with a basaltic or intermediate chemistry and with a mineral composition of at least 30% by weight amorphous content.

In another disclosed embodiment, the present invention comprises a basaltic hyaloclastite or intermediate basaltic hyaloclastite mineral from one or more of hyaloclastite, lava, , volcanic ash, scoria, pumice mineral with a basaltic or intermediate chemistry and with a mineral composition of at least 30% by weight amorphous content where the hyaloclastite, lava, volcanic ash, scoria, pumice has been quenched by water.

Accordingly, it is an object of the present invention to provide an improved continuous basalt fiber manufacturing process with reduced CO₂ emissions.

Another object of the present invention is to provide an improved continuous basalt fiber manufacturing process that uses less energy.

A further object of the present invention is to provide an improved continuous basalt fiber manufacturing process that results in less wear and tear on the manufacturing equipment such as the fiber extrusion dies.

Another object of the present invention is to provide a continuous basalt fiber manufacturing process that requires a lower temperature and shorter time in the melt furnace thereby reducing overall emissions and increasing the furnace production capacity when compared with the prior art.

These and other objects, features and advantages of the present invention will become apparent after a review of the following detailed description of the disclosed embodiments and the appended claims.

### DETAILED DESCRIPTION OF THE DISCLOSED EMBODIMENTS

Hyaloclastite is a tuff-like breccia typically rich in black volcanic glass, formed during volcanic eruptions under water, under ice or where subaerial flows reach the sea or other bodies of water. It has the appearance of angular fragments sized from approximately a millimeter to a few centimeters. Larger fragments can be found up to the size of pillow lava as well. Several minerals are found in hyaloclastite masses including, but not limited to, sideromelane, tachylite, palagonite, olivine, pyroxene, hornblende, biotite, hypersthene, feldspathoids, plagioclase, calcite and others. Fragmentation can occur by both an explosive eruption process or by an essentially nonexplosive process associated with the spalling of pillow basalt rinds by thermal shock or chill shattering of molten lava. The water-quenched basalt glass is called sideromelane, a pure variety of glass that is transparent, and lacks the very small iron-oxide crystals found in the more common opaque variety of basalt glass called tachylite. In hyaloclastite, these glassy fragments are typically surrounded by a matrix of yellow-to-brown palagonite, a wax-like substance that forms from the hydration and alteration of the sideromelane and other minerals. Depending on the type of lava, the rate of cooling and the amount of lava fragmentation, the particle of the volcanic glass (sideromelane) can be mixed with other volcanic rocks or crystalline minerals, such as olivine, pyroxene, magnetite, quartz, plagioclase, calcite and others.

Hyaloclastite is usually found within or adjacent subglacial volcanoes, such as tuyas, which is a type of distinctive, flat-topped, steep-sided volcano formed when lava erupts under or through a thick glacier or ice sheet. Hyaloclastite ridges are also called tindars and subglacial mounds are called tuyas or mobergs. They have been formed by subglacial volcanic eruptions during the last glacial period. A subglacial mound is a type of subglacial volcano. This type of volcano forms when lava erupts beneath a thick glacier or ice sheet. The magma forming these volcanoes was not hot enough to melt a vertical pipe through the overlying glacial ice, instead forming hyaloclastite and pillow lava deep beneath the glacial ice field. Once the glacier retreated, the subglacial volcano was revealed, with a unique shape as a result of its confinement within the glacial ice. Subglacial volcanoes are somewhat rare worldwide, being confined to regions that were formerly covered by continental ice sheets and also had active volcanism during the same period. Currently, volcanic eruptions under existing glaciers may create hyaloclastite as well. Hyaloclastite tuff-like breccia is a pyroclastic rock comprised of glassy juvenile clasts contained in a fine-grained matrix dominated by glassy shards. Hyaloclastite breccias are typically products of phreatomagmatic eruptions in particular associated with the eruption of magmas into bodies of water and formed by fragmentation of chilled magma. They are often formed from basaltic magmas and are associated with pillow lavas and sheet flows. In addition, any other type of lava, such as intermediate or andesitic, can form hyaloclastite under similar rapid cooling or quenching conditions.

Sometimes a subglacial or subaquatic eruption may produce a release of volcanic ashes that are ejected into the atmosphere which can then land back on the ground. At times a fine volcanic particle size may be called a "volcanic ash" by different professionals in the geological field even though the ash definition may be debatable. It is also possible that a subglacial or subaquatic eruption may have been produced by a magma with high volume of gas entrapped in the lava. The high volume of gas exsolution may create a mineral with very high porosity or vesicular structure and bulk density similar to scoria or pumice.

Volcanic basaltic hyaloclastite or intermediate basaltic hyaloclastite minerals, such as hyaloclastite, volcanic ash, scoria or pumice, which have been quenched by water, can be classified based on the amount of silica content as: basaltic (less than 53% by weight SiO₂), intermediate (approximately 53%-57% by weight SiO₂), or silicic such as andesitic (approximately 57%-63% by weight SiO₂), However, for the purpose of the present invention the basaltic range starts at approximately 40% SiO₂ and the andesitic range ends at 63% to 65% SiO₂.

Basaltic hyaloclastite, volcanic ash or pumice contains generally 40% to 53% by weight silica (SiO₂) contained in an amorphous or crystalline form or a combination thereof essentially calcic plagioclase feldspar and pyroxene (usually Augite), with or without olivine. In addition to silica, basaltic hyaloclastite, volcanic ash or pumice generally comprises approximately 10% to approximately 18% by weight Fe₂O₃, approximately 6% to approximately 18% by weight CaO, approximately 5% to approximately 15% by weight MgO and other elements in various percentages. Intermediate basaltic hyaloclastite, volcanic ash or pumice generally comprises approximately 53% to approximately 57% by weight silica (SiO₂) content. In addition to silica, intermediate basaltic hyaloclastite, volcanic ash or pumice generally comprises approximately 5% to approximately 12% by weight Fe₂O₃, approximately 6% to approximately 10% by weight CaO, approximately 3% to approximately 10% by weight MgO and other elements in various percentages. Basaltic hyaloclastite, volcanic ash or pumice may also contain, biotite, hypersthene (an orthopyroxene) and feldspathoids. The average specific density of basaltic hyaloclastite, volcanic ash or pumice is approximately 2.7-3.0 gm/cm³.

Andesite is an abundant igneous (volcanic) rock of intermediate composition, with aphanitic to porphyritic texture. In a general sense, it is an intermediate type between basalt and dacite. Andesitic hyaloclastite, volcanic ash or pumice ranges from approximately 57% to approximately 63% by weight silicon dioxide (SiO₂). For the purpose of the present invention, andesite is defined as having a SiO₂ content of up to 65%. In addition to silica, andesitic hyaloclastite, volcanic ash or pumice generally comprises approximately 5% to approximately 10% by weight Fe₂O₃, approximately 5% to approximately 10% by weight CaO, approximately 3% to approximately 8% by weight MgO and other elements in various percentages.

Most importantly, hyaloclastite or lava quenched by water mineral deposits are geologically young age but of rare occurrence where the amorphous and/or crystalline matrix has little to no alteration; whereas, the crystalline basalts used in state of the art fiber forming processes are geologically old mineral formations as these are common, resulting in weathered or altered crystals which requires more energy to melt at a higher temperature when compared with a hyaloclastite melting process.

The iron oxide found in crystalline basalt or crystalline andesitic basalt lava, that is used in state-of-the-art CBF production, contains an oxidized form of ferric iron (Fe ³⁺), or in the form of ferric oxide (Fe₂O₃), magnetite or hematite. Ferric oxide containing crystalline minerals, such as altered or weathered hornblende, magnetite or hematite, may remain in the melt composition, which react with platinum-rhodium bushings used in the prior art extrusion process. This causes excessive wear of the bushings, along with the associated cost of repairs and replacements. Additionally, if any oxidized iron crystals or microcrystals are still present in the melt, then such crystals may cause a break in the continuous fiber extrusion/pulling process causing the process to stop requiring a new process start up. Alternatively, if the oxidized iron crystals are present in the melt but have not caused a break in the continuous fiber extrusion/pulling process then such oxidized iron crystals present in the continuous fiber will act as a "pinch" or as a weak point or structural break in the fiber and under load causes failure resulting in an overall weaker fiber. As current state of the art processes which all use crystalline basalt or crystalline andesitic basalt mineral, likely geologically weathered or altered, containing oxidized iron crystals require higher melting temperatures to fully melt and homogenize the iron and quartz within the melt when compared to a basaltic or intermediate hyaloclastite mineral where the iron is in an un-oxidized state or contained in an amorphous state as well as most elements. Current state of the art has attempted to solve this challenge by using an intermediate or andesitic basalt mineral where the iron content is reduced to a minimum necessary to still achieve the desired properties, such iron content being less than 10% for the intermediate basalt and less than 8% for the andesitic basalt. However, selecting a mineral with a lower iron content, such as andesitic basalt, results in a mineral with higher silica content which in turns contains more quartz crystals. Quartz crystals also present similar challenges as oxidized iron crystals and require a relatively high temperature to melt and dissolve in the melt composition to create a sufficiently amorphous melt composition from which to pull or extrude fibers. It is believed that current continuous basal fibers are all made by melting a crystalline intermediate basalt or an andesitic basalt which contain at least one of the oxidized iron type crystals or quartz or both. Most basalt minerals deposits have a fairly high iron content with a significant portion of it being in the ferric Fe³⁺ or Fe₂O₃ oxidized form; whereas, any type of lava quenched by water, such as hyaloclastite, has very little to no oxidized iron in the form of Fe³⁺ known as ferric iron, Fe₂O₃ (hematite) and almost all of the iron is in the form of Fe²⁺ known as ferrous iron. However, the iron found in lava quenched by water type minerals, such as hyaloclastite, is in an amorphous or in a partially amorphous and partially microcrystalline matrix where the melting point is lower and the ferrous iron or Fe²⁺ does not created the challenges associated with the iron found in macro crystalline minerals such as basalt used in current practice. Additionally, by selecting a basaltic hyaloclastite or intermediate basaltic hyaloclastite CBF would contain a greater amount of iron when compared with the lower amount of iron found in andesitic basalt which results in a stronger fiber as the amount of iron in basaltic hyaloclastite case is above 10-12% and definitely above the 8% of the current state of the art continuous basalt fibers on the market. Therefore, ferrous Fe²⁺ iron from lava quenched by water does not cause the problems that the ferric oxide or Fe³⁺ iron found in crystalline basalt in current use causes in terms of mechanical wear and potential fiber extrusion breaks or weakening of the fiber strand. Furthermore, basaltic hyaloclastite and intermediate basaltic hyaloclastite does not contain any quartz crystals thereby further lowering the melting point of the mineral composition from which to extrude the fibers.

U.S. Patent No. 9,771,294 propose a method using a two-step process first by melting basalt at high temperature such as 2000 °C to insure all crystals and microcrystals are dissolved in the melt and then cooled to a lower temperature to draw fiber strands therefrom. The present invention uses a mineral raw mix with an amorphous or a combination of amorphous and microcrystalline composition, which will result in a melt composition target temperature much lower than required in U.S. Patent No. 9,771,294.

In conventional basalt fibers manufacture, it is important to determine if the basalt contains Fe³⁺ containing crystal such as Fe₂O₃ and iron-rich basalt grains be separated from the iron-poor basalt grains. In the case of basaltic hyaloclastite or intermediate basaltic hyaloclastite, the iron is contained in an amorphous or microcrystalline matrix where most or all of the iron is in the form of ferrous Fe²⁺ and very little or no iron is in the form of ferric Fe³⁺ such as Fe₂O₃ (hematite). In prior art basalt fiber extrusion equipment, platinum-rhodium bushings wear is a significant cost of the basalt fibers manufacturing process and reducing the wear and tear thereof is essential to improve the manufacturing process and reduce overall cost. Therefore, the use of a mineral that contains a reduced amount to no Fe₂O₃ (ferric oxide/hematite) is a significant improvement in the ability to extrude continuous basalt fibers. Lava quenched by water, such as basaltic hyaloclastite and intermediate basaltic hyaloclastite, solves this problem since most of the iron contained therein is of the Fe²⁺ type and is in an amorphous or microcrystalline matrix or a combination thereof where the iron is not directly bound to oxygen. Additionally, although basaltic hyaloclastite and intermediate basaltic hyaloclastite is rare, it is more common and more abundant in specific parts of the world than the extremely rare crystalline basalt from Ukraine, Russia and Georgia currently used in continuous basalt fiber manufacture.

Another aspect of mineral selection process discovered by the present invention is that not all iron containing crystals melt at the same temperature. The melting temperature of iron as a metal, and the melting temperature of oxidized iron crystals, such as ferrite, hematite or magnetite, is approximately 1,500 °C. Olivine crystals contain iron most likely in a Fe²⁺ state but occasionally in an oxidized Fe³⁺ state depending on the mineral deposit weathering and other factors. Weathered or altered olivine that contains ferrite would have a melting point similar to the ferrite which is higher than the un-altered olivine. Basaltic hyaloclastite or intermediate basaltic hyaloclastite may contain a small portion of olivine but in a microcrystalline matrix. Olivine containing un-oxidized Fe ²⁺ iron has a melting point of 1,200 °C while olivine containing Fe³⁺ oxidized iron has a higher melting point above 1,400 °C. Pyroxene crystals contain iron usually in an Fe²⁺ form. Microcrystalline pyroxene crystals found in lava quenched by water do not contain oxidized iron. Hornblende crystalline minerals are similar in the olivine described above, such that the altered or weathered hornblende will contain oxidized iron that requires a higher temperature to melt than un-altered hornblende. The melting point of Pyroxene and Hornblende is lower than that of olivine, at approximately 1,000 °C to 1,100 °C. In other words while the current state of the art is mitigating the presence of Fe ³⁺ oxidized iron containing crystals by selecting a mineral with the least amount of iron (less than 10% and most likely, less than 8%) and melting above 1,450 °C and typically up to and even above 1,600 °C, the present invention utilizes a mineral with the most amount of iron content however in an Fe²⁺ state (which may be shown on XRF analysis as either FeO or Fe₂O₃) either in an amorphous matrix or a combination of an amorphous and microcrystalline matrix where the iron containing crystals, such as unaltered olivine or unaltered hornblende, have a melting point substantially lower than the oxidized iron containing macro crystals, such as in ferrite, hematite, magnetite, altered olivine or altered hornblende.

A further matter of concern with the current state of the art process is the crystallization of the fiber that occurs as the extruded fiber strand cools during or after extrusion through the die or bushings. The cooling process from the melt temperature to the temperature suitable to be rolled into a spool has the potential to cause crystal formation within the fiber strand. Therefore, it is important or desirable that the melt does not contain any crystals or microcrystals as these seed more crystal growth during the fiber strand cooling process. In other words, it is important that the melt composition at the time of drawing fibers is mostly to fully amorphous; *i.e.,* free of macro crystals and microcrystals (containing less than 20% by weight crystalline or microcrystalline). The chemical composition of the mineral to be melted and the melting process is optimized to minimize and eliminate the potential of crystal formation during the cooling process as any crystal formation in the fiber strand may cause a break in the continuous fiber or weaken the fiber strand. The current state of the art has attempted to solve this issue mainly by selecting a mineral of andesitic basalt chemical composition with a limited amount of iron content to prevent crystal formation as the iron oxide crystals is the main factor in deleterious crystal formation in extruded fiber strand cooling where the crystal formation is usually in the form of olivine. The present invention solves this issue associated with the prior art by using a mineral with an amorphous or a combination of amorphous and microcrystalline content that has a lower melting point. Ideally the melting point of the mineral composition used to produce continuous fibers in the present invention is below the olivine crystalline formation temperature which can start at 1,400C and in some cases above. The present invention comprises selecting a mineral in an amorphous state or a combination of amorphous and microcrystals, such as lava quenched by water of basaltic, intermediate or andesitic chemical composition, having a melting point relatively lower than the prior art which thereby reduces energy consumption and wherein the mineral is devoid of Fe³⁺ ferric iron or oxidized iron and/or quartz. By selecting an amorphous or a combination of amorphous and microcrystalline mineral, the melt composition achieves an amorphous state at a lower temperature and in shorter time thereby using less energy Additionally, at a lower temperature iron crystal formation or other types of crystal formation in the extruded and cooled fiber strand is reduced or eliminated thereby creating a fiber strand with higher amorphous content, more consistent and higher tensile strength and improved physical properties.

As used herein, the term "un-oxidized iron" refers to Fe²⁺ iron or ferrous iron, which may be shown as FeO or Fe₂O₃ on XRF analysis or other more complex compounds in which the iron is Fe²⁺, or any crystal, microcrystal or amorphous mineral or matrix where iron is in the form of Fe²⁺ and it is either in an un-organized/amorphous state or combined with other elements, such as the formulas for pyroxenes, olivine, hornblende and the like. In these minerals, the Fe²⁺ is not directly bound to an oxygen atom. So. in this sense, the Fe²⁺ is in an unoxidized state as meant in the present invention. Examples of minerals containing un-oxidized iron are any lava quenched by water, either with basaltic, intermediate basaltic or andesitic chemical composition. Examples of crystals or microcrystals containing un-oxidized ferrous Fe²⁺ iron are pyroxenes group, unaltered olivine, unaltered hornblende and the like.

As used herein, the term "oxidized iron" refers to Fe³⁺ or any crystal, mineral or matrix where iron is in the form of Fe³⁺, or directly bound or reacted to oxygen, such as Fe₂O₃. Examples of minerals containing oxidized iron are ferrite, hematite, magnetite, weathered or altered olivine, weathered or altered hornblende and the like.

As used herein, the term "basaltic hyaloclastite", "intermediate basaltic hyaloclastite" or "andesitic hyaloclastite" means hyaloclastite, lava, volcanic ash, pumice from any and all sources so long as they have been quenched by water; *i.e.,* all irrespective of the mineral source from which it is derived, unless otherwise designated, with an amorphous content of approximately 30% to 100% by weight and a crystalline content of 0% to approximately 70% by weight, wherein the crystalline matrix is comprised of microcrystals and wherein the iron, is in a Fe²⁺ form contained therein is in an amorphous or microcrystalline matrix; *i.e.,* wherein iron found in microcrystals is either in an un-organized/amorphous state or it is bound to other elements and is not directly bound to oxygen. The foregoing ranges include all the intermediate values.

As used herein, the term "substantially free" means containing less than approximately 2% by weight. For example, basaltic hyaloclastite substantially free of ferrite, hematite, magnetite, altered or weathered olivine or altered or weathered hornblende means that the basaltic hyaloclastite contains less than 2% by weight ferrite, hematite, magnetite, altered or weathered olivine or altered or weathered hornblende.

Basaltic or mafic hyaloclastite, volcanic ash, or pumice generally has approximately 6% to approximately 18% by weight uncarbonated calcium found with the amorphous matrix or a combination of amorphous and microcrystalline matrix. As the amount of SiO₂ increases from the low of 40% by weight for basaltic hyaloclastite, volcanic ash, scoria or pumice to the andesitic and dacitic silica range, the uncarbonated calcium, magnesium, iron decreases to where in the rhyolitic range there is virtually no uncarbonated calcium available.

In the prior art, the chemical composition and mineralogical features of basalt (petrology) define its ability to form fibers and these properties therefore must match certain criteria. General limits for oxide content are shown in Table 1 below. Different sources give different ranges of oxide equivalents depending on limited or prior experience.

**TABLE 1 - Oxide equivalent value ranges for minerals suitable for basalt fibers:**

| **Oxide** | **SiO₂** | **Al₂O₃** | **FeO** | **MnO** | **MgO** | **CaO** | **Na₂O+K₂O** | **TiO₂** | **P₂O₅** |
|---|---|---|---|---|---|---|---|---|---|
| Mass Fraction | % | % | % | % | % | % | % | % | % |
| **Range** | **45-57** | **7-20** | **7-18** | **0.005-0.20** | **3-9** | **6-20** | **2-8** | **0.001-5** | **0.01-1** |

Acidity modulus (Mₐ), is an important parameter calculated from the oxide content and it is the defined by: ${M}_{a} = \frac{{SiO}_{2} + {Al}_{2} {O}_{3}}{CaO + MgO}$ Signs for oxides denote weight % of oxides. Mₐ denotes the ratio of acidic to basic oxides.

The optimal chemical composition for the production of continuous basalt fibers is considered to be one that gives an acidity modulus in the range 3 to 6.

The acidity modulus can be modified by the addition of various oxides depending on the starting mineral chemical composition and the target chemical composition. For instance, the addition of CaO and/or MgO reduce the acidity modulus. The addition of Al₂O₃ and/or SiO₂ cause an increase the acidity modulus. For example, for lava with a low acidic modulus, high silica content lava, such as pumice or perlite, can be added to increase the acidity of the melt. In particular, silica fume can be used to increase the acidity modulus. It is desirable in the case of basaltic hyaloclastite that has a low acidity modulus that may not be optimal for the CBF production to use an amorphous silica or aluminosilicate to raise the acidity without adding any new crystalline component.

The viscosity modulus is another important element in determining the optimal mineral and adjustment thereof to produce suitable basalt fibers. The viscosity modulus (Mv) is defined by the following formula: ${M}_{V} = \frac{{X}_{{SiO}_{2}} + {X}_{{Al}_{2} {O}_{3}}}{\overline{{2 X}_{{Fe}_{2} O} + {X}_{FeO} + {X}_{CaO} +} {X}_{MgO} + {X}_{{K}_{2} O} + {X}_{{Na}_{2} O}}$ wherein x is the molar fraction of oxides. The limits given by current state of the art for M_{V} for CBF production are generally between 2-3.

Viscosity of the basalt melt is another critical element in the production of basalt fibers. Basalt mineral or mix is heated and melted in the fiber production process. One of the most important properties of basalt that determines its suitability for manufacturing continuous fibers is the viscosity, η(units of Pas). The viscosity has to be within a certain range to allow for the optimum production of fibers. The viscosity of basalt melt, η(T), can be calculated using a simple equation which has been determined empirically. The variables in the equation are composition in weight %, temperature, T, and the acidity modulus, Ma: $η \left(T\right) = 3.62 \frac{{\left({SiO}_{2}\right)}^{3.07} {\left(FeO+{Fe}_{2}{O}_{3}\right)}^{1.34}}{{\left.{Al}_{2}{O}_{3}\right)}^{0.16} {\left(CaO\right)}^{0.40} {\left(T-1100°C\right)}^{2.58}} {\left({M}_{a}\right)}^{1.25}$ wherein T is temperature in °C. This equation is set up for a particular type of basalt and a specific temperature interval. The equation is therefore only applicable to basalt that has the same or a similar composition and is in the temperature interval 1200-1450 °C .

Other ways to calculate viscosity of basalt melts are available from open sources. Oxides, such as silica SiO₂, alumina Al₂O₃, magnesium oxide MgO and trivalent iron Fe₂O₃ increase viscosity however the ferric oxide has deleterious effect on mechanical parts of extrusion equipment. Alkali metal oxides, such as K₂O and Na₂O and divalent iron FeO lower viscosity.

To start the selection of appropriate mineral suitable to produce continuous basaltic fibers in the prior art, the chemical composition must meet the range of elements shown in Table 1 above. Secondly the acidity modulus (Ma) and viscosity modulus (Mv) has to be determined and adjusted as necessary to meet the ranges suitable for basaltic fiber manufacture. The acidity modulus should be in the range of 3-6 and the viscosity modulus in the range of 2-3.

Tables 2 and 3 below show chemical oxides analysis of basaltic hyaloclastite or intermediate basaltic hyaloclastite in accordance with the present invention, such as hyaloclastite, volcanic ash, or pumice-based minerals from various sources and shows CaO levels as well as the FeO, MgO, correlated with the SiO₂ content. The values of the Ca, Mg, Fe, Na and K oxides shown in Table 3 below are examples of desirable oxide levels for basalt fiber production in accordance with the present invention.

**TABLE 2 - Desirable chemical compositions of minerals suitable for basalt fibers production**

| Elements | LS36-10 | TDR | SND | AB | BKP | PVT | RDF | THR | VCR | PTR |
|---|---|---|---|---|---|---|---|---|---|---|
| SiO₂ | 45.20 | 45.00 | 47.70 | 47.20 | 46.36 | 48.50 | 50.60 | 52.85 | 54.94 | 60.39 |
| Al₂O₃ | 14.09 | 17.60 | 15.33 | 12.49 | 11.96 | 15.40 | 15.00 | 14.53 | 14.87 | 13.05 |
| Total SiO₂, Al₂O₃ | 59.29 | 62.60 | 63.03 | 59.69 | 58.32 | 63.90 | 65.60 | 67.38 | 69.81 | 73.44 |
| CaO | 14.77 | 12.70 | 11.51 | 11.51 | 9.68 | 9.37 | 9.16 | 8.94 | 8.84 | 6.69 |
| MgO | 6.11 | 7.27 | 10.89 | 11.06 | 5.50 | 6.57 | 7.78 | 4.94 | 4.93 | 6.37 |
| FeO | 13.07 | 12.90 | 12.75 | 12.04 | 15.38 | 13.00 | 10.20 | 12.03 | 9.85 | 7.21 |
| Total CaO, MgO, FeO | 33.95 | 32.87 | 35.15 | 34.61 | 30.56 | 28.94 | 27.14 | 25.91 | 23.62 | 20.27 |
| Na₂O | 3.22 | 1.83 | 1.58 | 1.72 | 2.60 | 3.40 | 3.34 | 2.69 | 2.63 | 2.23 |
| K₂O | 1.12 | 0.21 | 0.21 | 0.40 | 0.70 | 1.14 | 1.48 | 0.76 | 0.86 | 2.27 |
| Total Alkali | 4.34 | 2.04 | 1.79 | 2.12 | 3.30 | 4.54 | 4.82 | 3.45 | 3.49 | 4.50 |

**TABLE 3 - Desirable chemical compositions of basaltic hyaloclastite, intermediate basaltic hyaloclastite and andesitic hyaloclastite mineral showing the desired ratios between various elements and sums of various elements**

| **Sample ID** | **CaO** | **MgO** | **Al₂O₃** | **Fe₂O₃** | **SiO₂** | **Sum Al₂O₃+ SiO₂+Fe₂O₃ (%)** | **Sum Al₂O₃+ Fe₂O₃ (%)** | **Ratio Al₂O₃ to Fe₂O₃** | **Ratio SiO₂ to Sum (Al₂O₃ + Fe₂O₃)** |
|---|---|---|---|---|---|---|---|---|---|
| LS36-10 | 14.77% | 6.11% | 14.09% | 13.07% | 45.20% | 72.36% | 27.16% | 1.08 | 1.66 |
| TDR | 12.70% | 7.27% | 17.60% | 12.90% | 49.50% | 80.00% | 30.50% | 1.36 | 1.62 |
| SND | 11.51% | 10.89% | 15.33% | 12.75% | 48.90% | 76.98% | 28.08% | 1.20 | 1.74 |
| AB | 11.51% | 11.06% | 12.49% | 14.20% | 47.20% | 73.89% | 26.69% | 0.88 | 1.77 |
| BKP | 9.68% | 6.57% | 11.96% | 15.38% | 46.36% | 73.70% | 27.34% | 0.78 | 1.70 |
| PVT | 9.37% | 6.57% | 15.40% | 13.00% | 48.50% | 76.90% | 28.40% | 1.18 | 1.71 |
| RDF | 9.16% | 7.78% | 15.00% | 14.10% | 50.60% | 79.70% | 29.10% | 1.06 | 1.74 |
| THR | 8.94% | 4.94% | 14.53% | 12.03% | 52.85% | 79.41% | 26.56% | 1.21 | 1.99 |
| VCR | 8.84% | 4.93% | 14.87% | 9.85% | 54.94% | 79.66% | 24.72% | 1.51 | 2.22 |
| PTR | 6.69% | 6.37% | 13.05% | 7.21% | 60.39% | 80.65% | 20.26% | 1.81 | 2.98 |

In the examples above all except the PTR examples show desirable properties for the use as a basaltic hyaloclastite or intermediate basaltic hyaloclastite mineral to be mixed with limestone for the manufacture of basalt fibers in accordance with the present invention.

All examples above are minerals sampled, processed and analyzed by the inventor from various location around the world. The three-letter designation refers to the mineral source.

It is also important to have a low Si ratio to the sum of Fe and Al (SiO₂/(Fe₂O₃+Al₂O₃)) preferably of approximately 1.5, or more preferably approximately 1.25 to approximately 2.25 which will improve the melt properties.

The sodium equivalent (Na₂O + 0.658 K₂O) of the mineral in accordance with the present invention may be relatively high, but this can be a desirable property for alkali resistant fibers manufacture.

Mineralogy XRD data confirms some of the above, namely practical absence of quartz. The absence of quartz has an additional positive impact, compared to quartz found in the basalts used in current practice. Quartz is a hard mineral requiring high and specific energy to melt and higher melt temperatures. It is of critical importance to note that basaltic hyaloclastite or intermediate basaltic hyaloclastite in accordance with the present invention is substantially free of quartz which imparts specific benefits to the basalt fiber manufacturing process, whereas the conventional basalts from Ukraine and Georgia currently used in the basalt fiber manufacturing contain quartz in various amounts. The basaltic hyaloclastite or intermediate basaltic hyaloclastite contains CaO that is distributed between amorphous, and feldspars with very little if any CaO coming from carbonates, which in turn will contribute to decreasing CO₂ emissions during the melting process; *i.e.,* melting as well as improving the melt uniformity and efficiency thereby lowering the melt temperature and reducing energy consumption.

The first three samples in Table 2 and 3 above, LS36-10, TDR and SND, show a basaltic chemistry with the SiO₂ of approximately 45-47% and Al₂O₃ of 14-17.6% this results in a total silica and alumina content of 59.29-63.03%. The oxide values of these samples fall within the lower range of chemical composition needed for basalt fiber manufacture. To increase the acidity modulus alumina and silica may be added preferably in an amorphous state such as alumina oxide, silica fume, perlite, pumice, obsidian, dacitic or rhyolitic hyaloclastite and the like which elements are contained in a mostly amorphous or a combination of amorphous and microcrystalline form. To further adjust the melt properties such as viscosity, viscosity modulus, surface tension and the like, other minerals or elements may be added such as one or more of boron, boron salts, boron oxide, chromium oxide, cobalt oxide, nickel oxide, copper oxide, zinc oxide, gallium oxide, rubidium oxide, strontium oxide, zirconium oxide, rubidium oxide, niobium oxide, vanadium oxide, fluoride and chlorite each in an amount less than 1% by weight. Additionally, one or more of lanthanum oxide, lanthanides, boron, borax and the like can be added to modify the viscosity properties, each in quantities of less than 3% by weight.

The next three samples, AB, BKP and PVT, have similar basaltic chemical compositions of total silica and alumina of 59.69-63.9% and a total amount of uncarbonated calcium, magnesium and iron oxides of 28.94-34.61%. The oxide values of these samples fall within the range of chemical composition needed for basalt fiber manufacture. To increase the acidity modulus alumina and silica may be added preferably in an amorphous state such as alumina oxide, silica fume, perlite, pumice, obsidian, dacitic or rhyolitic hyaloclastite and the like which are contained in a mostly amorphous or a combination of amorphous and microcrystalline form. To decrease the acidity modulus calcium oxide, limestone, magnesium oxide, dolomite, sodium and potassium oxide preferably in an amorphous state, such as burnt lime and burnt dolomitic lime, can be added to these samples. To further adjust the melt properties such as viscosity, viscosity modulus, surface tension and the like, other minerals or elements may be added such as one or more of boron, boron salts, boron oxide, chromium oxide, cobalt oxide, nickel oxide, copper oxide, zinc oxide, gallium oxide, rubidium oxide, strontium oxide, zirconium oxide, rubidium oxide, niobium oxide, vanadium oxide, fluoride and chlorite, each in an amount less than 1% by weight,. Additionally, one or more of lanthanum oxide, lanthanides, boron, borax and the like can be added to modify the viscosity properties each in quantities of less than 3% by weight. If desired, zirconium oxide ZrO₂ can be added to improve alkalinity resistance and other properties in an amount of up to approximately 12% by weight.

The next two samples, RDF and THR, have similar basaltic chemical composition of total silica and alumina slightly higher of 65.6-67.38% and a total amount of uncarbonated calcium, magnesium and iron oxides of 25.91-27.14%. The oxide values of these samples fall within the range of the chemical composition needed for basalt fiber manufacture. To increase the acidity modulus alumina and silica may be added preferably in an amorphous state such as alumina oxide, silica fume, perlite, pumice, obsidian, dacitic or rhyolitic hyaloclastite and the like that elements are contained in a mostly amorphous or a combination of amorphous and microcrystalline form. To decreases the acidity modulus calcium oxide, limestone, magnesium oxide, dolomite, sodium and potassium oxide preferably in an amorphous state such as burnt lime and burnt dolomitic lime can be added to these samples. To further adjust the melt properties such as viscosity, viscosity modulus, surface tension and the like, other minerals or elements may be added such as one or more of boron, boron salts, boron oxide, chromium oxide, cobalt oxide, nickel oxide, copper oxide, zinc oxide, gallium oxide, rubidium oxide, strontium oxide, zirconium oxide, rubidium oxide, niobium oxide, vanadium oxide, fluoride and chlorite, each in an amount less than 1% by weight. Additionally, one or more of lanthanum oxide, lanthanides, boron, borax and the like can be added to modify the viscosity properties each in quantities of less than 3% by weight. If desired, zirconium oxide ZrO₂ can be added to improve alkalinity resistance and other properties in amount up to approximately 12% by weight.

The next sample, VCR, has an intermediate to andesitic chemical composition of total silica and alumina slightly higher of 69.81%. The oxide values of this samples fall within the range of chemical composition needed for the basalt fibers manufacture. To increase the acidity modulus alumina and silica may be added preferably in an amorphous state such as alumina oxide, silica fume, perlite, pumice, obsidian, dacitic or rhyolitic hyaloclastite and the like that elements are contained in a mostly amorphous or a combination of amorphous and microcrystalline. To deceases the acidity modulus calcium oxide, limestone, magnesium oxide, dolomite, sodium and potassium oxide preferably in an amorphous state such as burnt lime and burnt dolomitic lime can be added to these samples. To further adjust the melt properties such as viscosity, viscosity modulus, surface tension and the like, other minerals or elements may be added such as one or more of boron, boron salts, boron oxide, chromium oxide, cobalt oxide, nickel oxide, copper oxide, zinc oxide, gallium oxide, rubidium oxide, strontium oxide, zirconium oxide, rubidium oxide, niobium oxide, vanadium oxide, fluoride and chlorite, each in an amount less than 1% by weight,. Additionally, one or more of lanthanum oxide, lanthanides, boron, borax and the like can be added to modify the viscosity properties each in quantities of less than 3% by weight. If desired, zirconium oxide ZrO₂ can be added to improve alkalinity resistance and other properties in amount up to approximately12% by weight.

The last sample, PTR, has an andesitic chemical composition of total silica and alumina slightly higher of 73.44%. The oxide values of this samples fall within the upper range of chemical composition needed for basalt fiber manufacture and for some applications outside the range. To decreases the acidity modulus calcium oxide, limestone, magnesium oxide, dolomite, sodium and potassium oxide preferably in an amorphous state such as burnt lime and burnt dolomitic lime can be added to these samples. To further adjust the melt properties such as viscosity, viscosity modulus, surface tension and the like, other minerals or elements may be added such as one or more of boron, boron salts, boron oxide, chromium oxide, cobalt oxide, nickel oxide, copper oxide, zinc oxide, gallium oxide, rubidium oxide, strontium oxide, zirconium oxide, rubidium oxide, niobium oxide, vanadium oxide, fluoride and chlorite, each in an amount less than 1% by weight. Additionally, one or more of lanthanum oxide, lanthanides, boron, borax and the like can be added to modify the viscosity properties each in quantities of less than 3% by weight. If desired, zirconium oxide ZrO₂ can be added to improve alkalinity resistance and other properties in amount up to approximately 12% by weight.

Chemical composition as reported herein is measured by the XRF (X-ray fluorescence) method. This is a non-destructive analytical technique used to determine the elemental composition of materials. XRF analyzers determine the chemistry of a sample by measuring the fluorescent (or secondary) X-ray emitted from a sample when it is excited by a primary X-ray source. Each of the elements present in a sample produces a set of characteristic fluorescent X-rays ("a fingerprint") that is unique for that specific element, which is why XRF spectroscopy is an excellent technology for qualitative and quantitative analysis of material composition. It is to be noted that the XRF analysis technology quantifies the main elements as oxide equivalents where the indication of oxides is not necessarily an accurate reflection of the chemical form in which the elements are actually present. Specifically, iron is shown as FeO or sometimes as Fe₂O₃ while it may be in a different chemical form in the mineral such as in an unorganized/amorphous state or bound to other metals or elements and not bound to oxygen. The chemical analysis reported herein is the total oxide equivalent XRF scan known and used in the art for determining a mineral's chemical composition.

Sample preparation for XRF can be achieved using either of two distinct methods: a pressed powder and a fused glass disk. Pressed powder specimens are typically ground in a tungsten carbide ring and puck mill with a binding agent to reduce the particle size and provide a packed powder mount that will remain intact for transport and analysis. The advantages of this preparation method include the simplicity and better detection limits while disadvantages include what is known as the "mineralogical effect", which requires a similar matrix between a bracketed calibration and unknown specimens for the calibrations to be valid.

In the case of the basaltic hyaloclastite, intermediate basaltic hyaloclastite or andesitic hyaloclastite mineral, lava, volcanic ash and pumice quenched by water, etc., may contain microcrystals, of calcium, iron, alumina, silicates, and other minerals such as clinopyroxene Ca(Mg,Fe,Al,Ti)(Si,Al)₂O₆, calcium plagioclase feldspars (Na,Ca)Al(Si,Al)₃O₈, olivine (Fe,Mg)₂SiO₄ , hornblende (Ca,Na)₂₋₃(Mg,Fe,AI)₅(AI,Si)₈ O₂₂(OH,F)₂, are examples of microcrystalline materials that contain uncarbonated elements, such as calcium, magnesium, potassium, sodium and ferrous iron, that are available to melt at a lower temperature in the basalt fiber manufacturing process of the present invention which results in reduced emissions and reduced energy consumption in accordance with this present invention. Iron may be contained both in the amorphous matrix or in microcrystalline clinopyroxene Ca(Mg,Fe,Al,Ti)(Si,Al)₂O₆ and/or olivine (Fe,Mg)₂SiO₄ microcrystals.

Table 4 below shows examples of hyaloclastites, lava, volcanic ashes, or pumices that contain various amounts of amorphous and crystalline content. Samples 14 and 15 are rhyolitic glass such as perlite and the CaO content is below 1% compared with the basaltic hyaloclastite in Samples 1-13 where CaO ranges between 9-16%.

**TABLE 4**

| | **"Amorphous"** | **Clinopyroxene Ca(Mg,Fe,Al,Ti) (Si,Al)2O6** | **Plagioclase Feldspar (Na,Ca)Al(Si,Al)3O8** | **Olivine (Fe,Mg)2SiO4** | **Calcite** | **Unidentified** |
|---|---|---|---|---|---|---|
| **1** | >70 | - | 12 | 5 | 7 | <5 |
| **2** | >80 | | 10 | <5 | - | <5 |
| **3** | >70 | <3? | 11 | <5 | - | <5 |
| **4** | >80 | - | 13 | <3 | - | <5 |
| **5** | >55 | | 12 | 5 | 20 | <5 |
| **6** | >70 | - | 11 | 5 | <5 | <5 |
| **7** | >75 | - | 10 | 5 | - | <5 |
| **8** | >65 | - | 15 | 5 | <5 | <5 |
| **9** | >70 | <3? | 12 | 5 | | <5 |
| **10** | >30 | 25 | 43 | 5 | | <5 |
| **11** | >55 | | 15 | 5 | 15 | <5 |
| **12** | >40 | 17 | 37 | 4 | 1 | <5 |
| **13** | >70 | - | 15 | 8 | | <5 |
| **14** | **>95** | | | | | <5 |
| **15** | **>95** | | | | | <5 |

Samples 1 to 13 in Table 4 above have desirable compositions for use in accordance with the present invention for forming continuous basalt fibers.

When using basaltic hyaloclastite or intermediate basaltic hyaloclastite most if not all the elements are contained in an amorphous matrix. Therefore, the concerns of the mineral from a conventional manufacturing process are not present or greatly reduced. At the most the crystals found in hyaloclastite would be micro-crystalline and not the large type of crystals found in conventional basalts. Additionally, the amount of crystalline material would be reduced in scope and percentage as some or most of the matrix in basaltic hyaloclastite or intermediate basaltic hyaloclastite would be in amorphous form. As such these would be reduced to plagioclase, pyroxenes and amphiboles. Depending on the amorphous content and the resulting crystalline make up the raw mix chemical composition would dictate the most preferential type of product to make. In particular, hyaloclastite with an amorphous content of 40-80% by weight is preferable for the manufacturing of continuous basalt fibers. As another example, a raw mix with a composition of 30% amorphous content may be most suitable for manufacturing staples fibers. A factor to consider here is that the amorphous and microcrystalline content of the raw mix found in hyaloclastites makes the melt phase more uniform where the amorphous materials melt more uniformly at a given temperature along with the microcrystals to create a melt composition with an amorphous content above approximately 80%, preferably above approximately 88%, more preferably above approximately 90%, most preferably above approximately 95%, and ideally fully or 100% amorphous. In the case of conventional basalt, the multitude of crystals found therein and the fact that these crystals shown in the table above are relatively large, each with its own melt temperature, create a challenge of having the right melt. It is for this reason why where so many types of basalts from all over the world have been tried and failed in the manufacture of the basalt fibers. Regarding hyaloclastite in accordance with the present invention, the presence of a relatively large amount of amorphous content is desirable and wherein the crystalline portion is microcrystalline reduces the total number of crystal present in the hyaloclastite and therefore reduces the variabilities in the melt optimization. In other words, if instead of using a basalt containing 5-12 types of crystal minerals and being of relatively large crystal types, using lava quenched by water which contains no crystals at 100% amorphous or a combination of amorphous and 1 to 4 micro-crystals greatly simplifies the melt optimization which in turns improves the basalt fiber manufacturing process. The use of hyaloclastite in accordance with the present invention therefore improves the melt uniformity and efficiency thereby lowering the melt temperature, reducing energy consumption and thereby reducing emission, such as CO₂.

To increase the acidity modulus, alumina and silica can be added preferably in an amorphous state such as alumina oxide, silica fume, perlite, pumice, obsidian, dacitic or rhyolitic hyaloclastite and the like which elements are contained in a mostly amorphous or a combination of amorphous and microcrystalline form. The amount of these elements or oxides is calculated to meet the target mix chemical compositions up to approximately 20% by weight of the main ingredient of the hyaloclastite. To decreases the acidity modulus calcium oxide, limestone, magnesium oxide, dolomite, sodium and potassium oxide preferably in an amorphous state such as burnt lime and burnt dolomitic lime can be added to these samples. The amount of these elements or oxides is calculated to meet the target mix chemical compositions up to approximately 20% by weight of the main ingredient of the hyaloclastite. To further adjust the melt properties such as viscosity, viscosity modulus, surface tension and the like, other minerals or elements may be added such as one or more boron, boron salts, boron oxide, chromium oxide, cobalt oxide, nickel oxide, copper oxide, zinc oxide, gallium oxide, rubidium oxide, strontium oxide, zirconium oxide, rubidium oxide, niobium oxide, vanadium oxide, fluoride and chlorite each of which is added in amounts of less than 1% by weight. Additionally, one or more of lanthanum oxide, lanthanides, boron, borax and the like can be added to modify the viscosity properties each in quantities of less than 3% by weight. If desired, zirconium oxide ZrO₂ can be added to improve alkalinity resistance and other properties in amounts up to 12% by weight. The foregoing ranges include all of the intermediate amounts.

These compounds can also be added to adjust and improve the extruded melt temperature cooling properties resulting in the physical fiber crystallization or solidification properties. This translates into the optimization of the physical and chemical properties of the basalt fiber product.

In a disclosed embodiment of the present invention, the basaltic hyaloclastite or intermediate basaltic hyaloclastite mineral can be used in conjunction with limestone, dolomite, burnt lime, quick lime, aluminosilicate calcined clays, volcanic ashes with different properties than the main mineral, andesitic pumice, dacitic pumice, rhyolitic pumice, perlite, silica fume and the like, to adjust and modify the acidic modulus, the viscosity, the viscosity modulus, the melt surface tension melt and other necessary properties for the manufacture of basalt fibers. The basaltic hyaloclastite or intermediate basaltic hyaloclastite in accordance with the present invention preferably comes from hyaloclastite, lava, volcanic ash or pumice, or any other igneous rock. Such basaltic hyaloclastite or intermediate basaltic hyaloclastite preferably has a chemical composition comprising approximately 30% to approximately 57% by weight SiO₂, approximately 6% to approximately 18% by weight Al₂O₃, approximately 6% to approximately 18% by weight Fe₂O₃, and approximately 4% to approximately 25% by weight CaO and preferably wherein the sum of the Al₂O₃ + Fe₂O₃ is between approximately 20% to approximately 35% by weight, preferably wherein the ratio between the Al₂O₃ and the Fe₂O₃ is approximately 0.75 and approximately 1.50 ideally or approximately 1 and the ratio between the SiO₂ and the sum of the Al₂O₃ + Fe₂O₃ is preferably between approximately 1.25 and 2.25, ideally approximately 1.5.

In addition to the foregoing, other compounds can be present in small amounts, such as K₂O, TiO₂, P₂O₅, MnO, various metals, rare earth trace elements and other unidentified elements. When combined, these other compounds represent less than 10% by weight of the total chemical composition of the basaltic hyaloclastite or intermediate basaltic hyaloclastite mineral such as hyaloclastite, lava, scoria, volcanic ash or pumice mineral.

In another disclosed embodiment, the hyaloclastite, volcanic ash or pumice in accordance with the present invention preferably has a density or specific gravity of approximately 2.4 to approximately 3.1.

The basaltic hyaloclastite or intermediate basaltic hyaloclastite mineral in accordance with the present invention can be in microcrystalline or amorphous (glassy) form and is usually found as a combination of both in varying proportions. Preferably, the hyaloclastite, volcanic ash or pumice in accordance with the present invention comprises approximately 30% to 100% by weight amorphous form, more preferably approximately 40% to approximately 80% by weight amorphous form, most preferably approximately 50% to approximately 70% by weight amorphous form, especially approximately 80% to approximately 95% by weight amorphous form. The crystalline portion of hyaloclastite preferably comprises one or more of 0% to approximately 20% by weight olivine, 0% to approximately 40% by weight clinopyroxene, 0% to approximately 60% by weight plagioclase, and 0% to approximately 40% (or less than 40%) by weight other minerals including, but not limited to calcite, hornblende, biotite, K-feldspars, mordenite, clinoamphibole, hypersthene (an orthopyroxene), feldspathoids sulfides, metals, rare earth minerals, other unidentified minerals and combinations thereof. The foregoing ranges include all the intermediate values.

In a disclosed embodiment, the hyaloclastite or lava quenched by water mineral selected for the raw mix used for the melting composition may have to be reduced in size to a suitable particle to facilitate efficient melting of the composition. The reduction in size can be done with any suitable crushing, milling or grinding equipment. Examples of such equipment are roller mills, hammer mills, high pressure grinding roll (HPGR) mills, disk mills, jet mills and the like. Hyaloclastite particles can be prepared by grinding using a hammer, disc, ball mill and vibratory pulverizer, respectively. Alternatively, hyaloclastite, or lava quenched by water in accordance with the present invention can be processed in multiple stages using one or more of the above. The target particle size can be of sand or gravel size, or potentially of fine sand-like particle size from 1 mm or less to 20 mm or more. The size of the raw feed composition can be of any suitable size according to requirement of the furnace type used in the melting process and is not the subject of the present invention.

In another embodiment of the current invention while the hyaloclastite mineral is reduced to the desired size as needed for the melt composition, it can be exposed to microwave energy field such that the microwaves alters or transforms the crystalline or microcrystalline portion of the mineral into an amorphous or microcrystalline portion to aid in the melting process as a greater amorphous portion is easier to melt and homogenize and at a lower temperature than the macrocrystalline portion. As an example, a mineral with a composition of 20% amorphous and 80% microcrystalline content exposed to microwave energy field, either during or after the process of reduction in size described above, may be converted into a 50% amorphous and 50% microcrystalline content. In another example, a mineral with a composition of 50% amorphous and 50% microcrystalline content exposed to microwave energy field, either during or after the process of reduction in size described above, may be converted into an 80% amorphous and 20% microcrystalline content. The resulting mineral retains its chemical compositions while the altered amorphous vs. crystalline composition increases the amorphous portion thereby greatly improving the efficiency of the melting process, resulting in a lower melting point and thereby a lower melting temperature of the melt composition. As such the term hyaloclastite can apply to both natural state amorphous/microcrystalline composition or the altered composition of a portion of the crystalline content into an amorphous state whereby the amorphous content is increased through the microwave treatment during or after the mineral comminution or reduction in size process. Both the amorphous material and the microcrystalline material of hyaloclastite will melt at a lower temperature and/or will melt more quickly than a largely macrocrystalline mineral. Thus, the use of a mineral with the greatest amount of amorphous composition, such as highly amorphous hyaloclastite, is desirable in the present invention. This feature allows the process to operate more quickly, at a lower temperature, with a lower energy consumption, and with a lower risk of fiber strand crystallization. Therefore, the present invention provides a more efficient process and produces a continuous fiber having improved properties at a lower cost when using hyaloclastite as specified by the present invention.

In a further embodiment of the current invention, the hyaloclastite is tested to measure the content of oxidized iron that may be contained in minor amounts in the basaltic, intermediate or andesitic hyaloclastite in the form of magnetite, ferrite or hematite. If oxidized iron crystals are found, then the process of reducing in size may include an optional process of removing the oxidized iron by magnetic separation. This process can be applied either during the reduction in size or after the reduction in size process. Oxidized iron contained in magnetite has ferromagnetic properties and can be separated by a magnetic field. Oxidized iron contained in ferrite has ferromagnetic properties and can also be separated by a magnetic field. As the hyaloclastite particles are moved from the grinding mill to a storage silo, a magnet suitable to create a magnetic field of sufficient strength can be used to remove hematite crystals employed in any suitable configuration necessary to remove and separate such crystals from the hyaloclastite to be used in the melt composition to draw fibers from. Oxidized iron contained in hematite has weak magnetic properties that may be separated by using strong magnets such as rare earth magnets. Alternatively, hyaloclastite containing minor amounts of hematite may be treated with a microwave field as described above may increase the hematite magnetic properties which then can be separated by a magnetic field. Any type of suitable magnets, such as conventional magnets, electromagnets or rare-earth magnets, can be configured to create a magnetic field as the hyaloclastite is being reduced in size and is moved by a conveyer belt, a duct or the like. Any suitable type or configuration of magnets to create a sufficiently strong magnetic field to separate the ferromagnetic oxidized iron crystal portion of the melt composition can be used with the present invention.

In a disclosed embodiment of the present invention, the hyaloclastite, or lave quenched by water, raw mix composition in accordance with the present invention is placed into a furnace suitable for producing the melt composition. Any furnace suitable to create a melt composition in the temperature range of 1,200 °C to 1,500 °C can be used. The type of furnace used is not a subject of the present invention. The bottom or side of the furnace will have an outlet of sufficient diameter to allow the flow of the melt to pass through and drop onto an extrusion die below such as a platinum-rhodium die or bushing. Any type of extrusion die suitable for the manufacture of continuous basalt fibers can be used. Bellow the extrusion die at a distance suitable for the manufacture of continuous basalt fibers a spinning drum can be used to wind the fibers into rovings. Between the extrusion bushing or die the fibers may be coated with a lubricant, binding agent, hardener or resin to improve the fiber properties. Any organic or non-organic type agent known in the art for improving properties of plastic or fibers can be used. An example of such agent is amine hardeners. Any coating agent known in the art may be used and the type of manner of this is not a subject of the present invention.

In a disclosed embodiment of the present invention, the hyaloclastite, hyaloclastite, volcanic glass, volcanic ash, or lava quenched by water is substantially free of ferrite, hematite, magnetite.

In another disclosed embodiment of the present invention, the hyaloclastite, hyaloclastite, volcanic glass, volcanic ash, or lava quenched by water is substantially free of Fe₂O₃.

In a disclosed embodiment of the present invention, the melt preferably has a temperature of approximately 1250 °C to approximately 1900 °C; more preferably approximately 1300 °C to approximately 1800 °C; most preferably approximately 1300 °C. to approximately 1500 °C; especially approximately 1500 °C to approximately 1700 °C; more especially approximately 1500 °C to approximately 1800 °C, most especially approximately 1500 °C to approximately 1900 °C; preferably approximately 1300 °C to approximately 2000 °C; more preferably approximately 1300 °C to approximately 1700 °C. The foregoing ranges include all the intermediate values.

In one disclosed embodiment makes the melt phase at a fiber drawings temperature comprises amorphous or amorphous and microcrystalline composition to create a melt composition with an amorphous content above approximately 80%, preferably above approximately 88%, more preferably above approximately 90%, most preferably above approximately 95%, and especially fully or 100% amorphous. The foregoing ranges include all the intermediate values.

In another disclosed embodiment of the present invention, the fiber strand is preferably approximately 1 micron to approximately 18 microns in diameter; more preferably approximately 4 microns to approximately 15 microns; most preferably approximately 6 microns to approximately 12 microns. The fiber can also be 8 microns to approximately 10 microns; especially approximately 7 microns. The foregoing ranges include all the intermediate values.

In a further disclosed embodiment of the present invention, continuous fiber strands comprise amorphous or amorphous and microcrystalline content with an amorphous content above approximately 80%, preferably above approximately 88%, more preferably above approximately 90%, most preferably above approximately 95%, and ideally fully or 100% amorphous. The foregoing ranges include all the intermediate values.

In one embodiment, the fiber-formation unit produces a continuous fiber or a plurality of fibers, i.e. a roving. The present invention can use any type of furnace and fiber formation unit, such as gas or electric furnace, single stage or multistage temperature units, with single or multi-fiber tap-hole and it is not the subject of the present invention.

The following examples are illustrative of selected embodiments of the present invention and are not intended to limit the scope of the invention. All percentages used herein are percent by weight unless specifically stated otherwise.

### EXAMPLE 1

Hyaloclastite or a basaltic hyaloclastite or intermediate basaltic hyaloclastite mineral is mined from a quarry and delivered to a basalt fibers manufacturing plant where it is ground to a fine particle size suitable for a basalt fiber manufacture process. The hyaloclastite or basaltic hyaloclastite or intermediate basaltic hyaloclastite mineral preferably has a chemical composition comprising approximately 30% to approximately 57% by weight SiO₂, approximately 10% to approximately 18% by weight Al₂O₃, approximately 8% to approximately 18% by weight Fe₂O₃, and approximately 4% to approximately 25% by weight CaO and preferably wherein the sum of the Al₂O₃ + FeO is between approximately 20% to approximately 35% by weight, preferably wherein the ratio between the Al₂O₃ and the FeO is approximately 0.75 and approximately 1.50 ideally or approximately 1 and the ratio between the SiO₂ and the sum of the Al₂O₃ + Fe₂O₃ is preferably between approximately 1.25 and 2.25 ideally or approximately 1.5. The hyaloclastite does not contain any oxidized iron containing crystals. Minor constituents such as limestone are ground to a particle size similar to the ground hyaloclastite. The ground limestone and basaltic or intermediate hyaloclastite mineral are blended together, in the approximate ratios suitable for the basalt fibers manufacturing process of approximately 75% to approximately 98% by weight basaltic hyaloclastite or intermediate basaltic hyaloclastite and approximately 2% to approximately 25% by weight limestone mineral. The blended mineral feed composition is preheated and then fed into a melting furnace typical for the manufacture of basalt fibers. The furnace is fired to a temperature of approximately 1250 to 1650 °C and the blended composition is kept in the furnace for a time sufficient to melt. After the composition is melted, the standard fiber extrusion or fiberization process is followed to produce the basalt fibers.

### EXAMPLE 2

Hyaloclastite AB1 mineral from Table 2 and 3 above is mined from a quarry and delivered to a basalt fibers manufacturing plant where it is crushed to a fine particle size suitable for a basalt fiber manufacture process. The hyaloclastite has the chemical composition shown in Tables 2 and 3. The hyaloclastite does not contain any oxidized iron containing crystals. To increase the acidity modulus, alumina and silica can be added preferably in an amorphous state such as alumina oxide, silica fume, perlite, pumice, obsidian, dacitic or rhyolitic hyaloclastite and the like which elements are contained in a mostly amorphous or a combination of amorphous and microcrystalline form. The amount of these elements or oxides is calculated to meet the target mix chemical compositions up to approximately 15% by weight of the main ingredient of the hyaloclastite. To further adjust the melt properties such as viscosity, viscosity modulus, surface tension and the like, other minerals or elements may be added such as one or more of boron, boron salts, boron oxide, chromium oxide, cobalt oxide, nickel oxide, copper oxide, zinc oxide, gallium oxide, rubidium oxide, strontium oxide, zirconium oxide, rubidium oxide, niobium oxide, vanadium oxide, fluoride and chlorite, each in an amount less than 1% by weight. Additionally, one or more of lanthanum oxide, lanthanides, boron, borax and the like can be added to modify the viscosity properties each in quantities of less than 3% by weight. If desired, zirconium oxide ZrO₂ can be added to improve alkalinity resistance and other properties in amount up to approximately 12% by weight. Any one or more of the above up to 3% is added to the hyaloclastite. The silica fume and hyaloclastite mineral are blended together, in the approximate ratios suitable for the basalt fibers manufacturing process of approximately 85% to approximately 98% by weight basaltic hyaloclastite or intermediate basaltic hyaloclastite and approximately 2% to approximately 15% by weight silica fume. The blended mineral feed composition is preheated and then fed into a melting furnace typical for the manufacture of basalt fibers. The furnace is fired to a temperature of approximately 1250 to 1650 °C and the blended composition is kept in the furnace for a time sufficient to melt the composition. After the composition is melted, the standard fiber extrusion or fiberization process is followed to produce basalt fibers.

### EXAMPLE 3

Intermediate basaltic hyaloclastite mineral PTR from Table 2 and 3 above is mined from a quarry and delivered to a basalt fibers manufacturing plant where it is crushed to a fine particle size suitable for a basalt fiber manufacture process. The PTR intermediate basaltic hyaloclastite mineral has a chemical composition is shown in Tables 2 and 3. The mineral has an amorphous composition of 60% and a microcrystalline composition of 40%. To decrease the acidic modulus minor constituents such as dolomite or burnt lime are ground to a particle size similar to the hyaloclastite. The ground dolomite and intermediate hyaloclastite mineral are blended together in the approximate ratios suitable for basalt fiber manufacturing process of approximately 75% to approximately 98% by weight intermediate basaltic hyaloclastite and approximately 2% to approximately 15% by weight dolomite mineral. To further adjust the melt properties such as viscosity, viscosity modulus, surface tension and the like, other minerals or elements may be added such as one or more of boron, boron salts, boron oxide, chromium oxide, cobalt oxide, nickel oxide, copper oxide, zinc oxide, gallium oxide, rubidium oxide, strontium oxide, zirconium oxide, rubidium oxide, niobium oxide, vanadium oxide, fluoride and chlorite, each in an amount less than 1% by weight. Additionally, one or more of lanthanum oxide, lanthanides, boron, borax and the like can be added to modify the viscosity properties each in quantities of less than 3% by weight. If desired, zirconium oxide ZrO₂ can be added to improve alkalinity resistance and other properties in amount up to approximately 12% by weight. Any one or more of the above up to 3% by weight is added to the hyaloclastite. The blended mineral feed composition is preheated and then fed into a melting furnace typical for the manufacture of basalt fibers. The furnace is fired to a temperature of approximately 1450 °C and the blended composition is kept in the furnace for a time sufficient to melt the composition. After the composition is melted, the standard fiber extrusion or fiberization process is followed to produce basalt fibers.

### EXAMPLE 4

Hyaloclastite with the chemical composition and properties shown in Example 2 above is crushed and screened to a 2 mm particle size to create a raw mineral feed. The mineral feed composition is fed into a melting furnace typical for the manufacture of continuous basalt fibers. The furnace is fired to a temperature of approximately 1350 °C and the composition is kept in the furnace for a time sufficient to melt. After the composition is melted, the standard fiber extrusion or fiberization process is followed to produce continuous basalt fibers. The continuous basalt fibers are coated with a warm curing amine hardener. Fiber strand is collected at the bottom and spooled into rovings. The individual fibers are then combined, impregnated with resin and bound together through a pultrusion process and cured into reinforcing bars.

### EXAMPLE 5

Andesitic hyaloclastite mineral with the chemical composition of Example 3 above is mined from a quarry and delivered to a basalt fiber manufacturing plant where it is crushed and screened to a fine particle size suitable for a continuous basalt fiber manufacturing process. The fine particle size mineral is exposed to a microwave field, and the crystalline composition is modified to 80% amorphous and 20% microcrystalline. Additionally, one or more of lanthanum oxide, lanthanides, boron, borax and the like can be added to modify the viscosity properties each in quantities of less than 3% by weight. If desired, zirconium oxide ZrO₂ can be added to improve alkalinity resistance and other properties in amount up to approximately 12% by weight. Any one or more of the above up to 3% by weight is added to the hyaloclastite. The blended mineral feed composition is then fed into a melting furnace typical for the manufacture of basalt fibers. The furnace is fired to a temperature of approximately 1350 °C and the blended composition is kept in the furnace for a time sufficient to melt the composition. After the composition is melted, the standard fiber extrusion or fiberization process is followed to produce continuous basalt fibers.

### EXAMPLE 6

A basaltic hyaloclastite of average particle size of 200 microns is analyzed for its properties. The chemical composition is analyzed using XRF and is shown in the Table 5 below.

**Table 5 - XRF chemical composition**

| **Analyte Symbol** | **SiO₂** | **Al₂O₃** | **Fe₂O₃(T)** | **MnO** | **MgO** | **CaO** | **Na₂O** | **K₂O** | **TiO₂** | **P₂O₅** |
|---|---|---|---|---|---|---|---|---|---|---|
| Unit Symbol | % | % | % | % | % | % | % | % | % | % |
| Analysis Method | FUS-ICP | FUS-ICP | FUS-ICP | FUS-ICP | FUS-ICP | FUS-ICP | FUS-ICP | FUS-ICP | FUS-ICP | FUS-ICP |
| LS 18-3.20 | 49.16 | 15.13 | 13.04 | 0.195 | 5.7 | 8.75 | 3.20 | 1.13 | 1.74 | 0.41 |
| | | | | | | | | | | |

The crystalline composition is analyzed using XRD and is shown in the Table 6 below.

**Table 6 - Mineral crystalline composition:**

| **Analyte Crystal** | **Amorphous** | **Plagioclase (Na,Ca)Al(Si,Al)₃O₈** | **Clinopyroxene Ca(Mg,Fe,Al,Ti)Si,Al)₂O₆** | **Olivine (Fe,Mg)₂SiO₄** | **Quartz SiO₂** | **Calcite CaCO₃** |
|---|---|---|---|---|---|---|
| Unit Symbol | % | % | % | % | % | % |
| Analysis Method | QXRD | QXRD | QXRD | QXRD | QXRD | QXRD |
| LS18-3.20 | 84 | 10.5 | 2 | 3.5 | n.d | n.d. |

Before melting the raw mineral composition in a furnace to draw continuous basalt fibers, the basaltic hyaloclastite is analyzed to determine the wetting angle of the melt. The wetting angle correlates to the melt temperature and viscosity and it is an important factor in the continuous basalt fibers drawing/extrusion process as the melt is contacting the bushings or extrusion die. Current practice notes that the wetting angle needs to be of less than 20° but greater than zero. Samples from the basaltic hyaloclastite are placed in a Linseis Heating Optical Microscope to heat and melt the sample while the instrument is taking images of the sample melting and deformation from which the wetting angle is calculated. The wetting angle in relation to the melt temperature is shown in the Table 7 below. From this testing protocol it is determined that the melt composition target should be approximately 1300 °C with a wetting angle of approximately 10-12°.

**Table 7 - Melt temperature and wetting angle**

| **Temperature (°C)** | **Contact angle 1 (°)** | **Contact angle 2 (°)** | **Height (µm)** | **Width (µm)** | **Volume (mm³)** |
|---|---|---|---|---|---|
| 1150 | 82.91 | 90.66 | 4135.48 | 4541.1 | 45.41 |
| 1159 | 84.73 | 98.06 | 4159.58 | 4553.96 | 46.38 |
| 1168 | 84.51 | 96.85 | 4170.76 | 4559.63 | 46.82 |
| 1177 | 84.52 | 96.9 | 4142.96 | 4566.85 | 46.34 |
| 1186 | 77.16 | 87.98 | 3875.45 | 4486.24 | 40.46 |
| 1195 | 76.57 | 90.27 | 2834.98 | 4639.01 | 30.61 |
| 1204 | 58.98 | 60.3 | 1944.67 | 5898.61 | 28.59 |
| 1213 | 43.35 | 43.22 | 1491.06 | 6661.86 | 26.3 |
| 1222 | 32.99 | 32.64 | 1219.66 | 7132.07 | 23.88 |
| 1231 | 26.93 | 26.9 | 1063.34 | 7459.33 | 22.4 |
| 1240 | 22.53 | 23.34 | 968.64 | 7708.36 | 21.37 |
| 1249 | 20.22 | 20.04 | 887.26 | 7888.47 | 20.28 |
| 1258 | 17.75 | 17.76 | 837.86 | 8009.87 | 18.79 |
| 1267 | 15.78 | 16.09 | 810.78 | 8105.13 | 17.93 |
| 1276 | 14.57 | 14.93 | 795.39 | 8174.7 | 17.27 |
| 1285 | 13.6 | 13.6 | 792.8 | 8191.44 | 16.48 |
| 1294 | 13.17 | 13.29 | 786.08 | 8164.95 | 15.9 |
| 1303 | 12 | 12.86 | 783.36 | 8149.22 | 15.41 |
| 1312 | 10.89 | 11.77 | 789.4 | 7980.96 | 13.75 |
| 1321 | 10.59 | 11.12 | 885.04 | 7830.17 | 13.32 |
| 1330 | 9.95 | 10.97 | 550.55 | 7782.6 | 10.94 |
| 1339 | 8.88 | 10.77 | 543.05 | 7699.15 | 10.37 |
| 1348 | 8.26 | 9.94 | 443.8 | 7691.11 | 8.94 |

Following the wetting angle evaluation, basaltic hyaloclastite raw mix is then placed into an electric induction melting furnace and at the temperature 1309 °C it is determined that the composition is sufficiently molten to start pulling fibers. No additional additives are used in the raw mix to create the melt composition, and no resin or additive are used on the fiber strand itself as it is pulled. Continuous basalt fibers are pulled with a spindle motor on a spooling cylinder at a velocity run of 550 m/min (meters/minute). Fibers are wound on a spool. Upon run completion fiber strands are removed from the bundle at random. A total of 17 specimens is cut into short lengths and mounted on a mounting tab where the two ends are glued to the mounting tab using Locktite SuperGlue resin. The fibers mounted on the tabs are allowed to cure for 24 hrs. The total length of the fiber mounted on the tab is measured to be 63 mm resulting in a testing fragment length of approx. 12.7 mm to 15 mm. Each fiber specimen diameter is then measured using a Digital Microscope with a polarizing objective at a magnification of RZ x1500. The fiber's diameter is measured before each fiber specimen is tested for tensile strength using an Instron 68SC-2 instrument. The fiber diameter is measured at a randomly selected locations in the test area and at the fracture location after each test. The fiber stand diameter produced in this run is plus or minus 15 microns as shown in the table below. The diameter at the fracture location is used to determine the results according to the standard C1557-14. In the case of a fiber break along the entire length, the fiber diameter measured before the test is used in the results. The Instron testing machine is equipped with 50N Pneumatic grips at each end of the fiber mounting tab. The rate of pulling apart of the ends of the fiber (cross-head speed) is 50 mm/m (mm per minute). The results of the tensile strength testing is shown in the Table 8 below. This shows suitable tensile strength properties even though the fiber strands are not treated with any resin or hardener.

**TABLE 8 - Instron ASTM C1557-14 tensile strength results:**

| **Specimen** | **Maximum Force [N]** | **Tensile stress at Maximum Force [MPa]** | **Modulus (Automatic Young's) [Gpa]** | **Tensile stress (Displacement) at Break (Standard)%** | **Diameter [um]** | **Length [mm]** | **Time at Break (Standard) [s]** |
|---|---|---|---|---|---|---|---|
| 1 | 0.464 | 2639.39 | 84.31 | 3.21 | 14.96 | 13.02 | 50.16 |
| 2 | 0.442 | 2559.86 | 77.05 | 3.25 | 14.82 | 12.00 | 46.80 |
| 3 | 0.447 | 2830.65 | 84.50 | 3.27 | 14.18 | 12.19 | 47.86 |
| 4 | 0.326 | 2066.39 | 91.54 | 2.14 | 14.18 | 12.94 | 33.24 |
| 5 | 0.417 | 2538.16 | 92.89 | 2.67 | 14.46 | 13.74 | 44.00 |
| 6 | 0.492 | 2801.18 | 89.75 | 3.18 | 14.96 | 13.42 | 51.52 |
| 7 | 0.452 | 2529.64 | 86.56 | 2.87 | 15.09 | 13.42 | 46.52 |
| 8 | 0.354 | 2192.83 | 80.56 | 2.58 | 14.33 | 13.08 | 40.54 |
| 9 | 0.393 | 2195.37 | 85.46 | 2.54 | 15.09 | 13.65 | 41.80 |
| 10 | 0.506 | 2930.34 | 88.97 | 3.21 | 14.83 | 13.88 | 53.78 |
| 11 | 0.472 | 2657.92 | 82.80 | 3.15 | 15.04 | 14.21 | 53.70 |
| 12 | 0.498 | 2944.81 | 86.60 | 3.32 | 14.67 | 13.95 | 55.88 |
| 13 | 0.386 | 2254.66 | 79.03 | 2.76 | 14.76 | 13.61 | 45.32 |
| 14 | 0.410 | 2356.34 | 81.97 | 2.78 | 14.88 | 13.25 | 44.22 |
| 15 | 0.313 | 1717.67 | 80.26 | 2.02 | 15.24 | 13.12 | 32.00 |
| 16 | 0.215 | 1144.10 | 74.38 | 1.40 | 15.46 | 13.22 | 22.28 |
| 17 | 0.561 | 3363.36 | 98.04 | 3.45 | 14.57 | 12.80 | 53.00 |
| Median | 0.442 | 2538.16 | 84.50 | 2.87 | 14.83 | 13.25 | 46.52 |
| Maximum | 0.561 | 3363.36 | 98.04 | 3.45 | 15.46 | 14.21 | 55.88 |
| Minimum | 0.215 | 1144.10 | 74.38 | 1.40 | 14.18 | 12.00 | 22.28 |

### EXAMPLE 7

Basaltic hyaloclastite raw mix with the chemical and crystal mineral composition shown in the Example 4 above is placed into an electric induction melting furnace and melted at a temperature of 1335 °C. It is determined that the melt composition is sufficiently molten to start pulling fibers. No additional additives are used in the raw mix to create the melt composition. As the fiber strand is pulled through the bushings it is coated with the amine hardener Aradur^{®} 3475, (1,3-cyclohexanedimethanamine) from Huntsman Chemical Company. Continuous basalt fibers are pulled with a spindle motor on a spooling cylinder at a velocity run of 550 m/min (meters/minute). Fibers are wound on a spool. Upon run completion fibers strands are removed from the bundle at random. A total of 19 specimens is selected and prepared and tested as described in the Example 4 above using the same equipment. The fiber strand diameter produced in this run is plus or minus 15 microns as shown in Table 9 below. The results of the tensile strength testing are shown in the Table 9 below. This manner of producing the fibers shows improved tensile strength properties as the fiber strands are treated with the amine hardener.

**TABLE 9 - Instron ASTM C1557-14 tensile strength results:**

| **Specimen** | **Maximum Force [N]** | **Tensile stress at Maximum Force [MPa]** | **Modulus (Automatic Young's) [Gpa]** | **Tensile stress (Displacement) at Break (Standard)%** | **Diameter [um]** | **Length [mm]** | **Time at Break (Standard) [s]** |
|---|---|---|---|---|---|---|---|
| 1 | 0.643 | 3905.47 | 82.66 | 4.75 | 14.48 | 12.59 | 71.82 |
| 2 | 0.460 | 2620.17 | 88.01 | 2.91 | 14.95 | 12.23 | 42.72 |
| 3 | 0.365 | 1893.90 | 75.03 | 2.47 | 15.66 | 12.50 | 37.02 |
| 4 | 0.576 | 3101.33 | 85.59 | 3.61 | 15.38 | 13.06 | 56.98 |
| 5 | 0.554 | 3153.25 | 84.99 | 3.64 | 14.96 | 12.82 | 56.42 |
| 6 | 0.523 | 3094.04 | 94.75 | 3.25 | 14.67 | 12.57 | 49.28 |
| 7 | 0.444 | 2482.44 | 72.23 | 3.52 | 15.09 | 12.45 | 52.80 |
| 8 | 0.378 | 2105.84 | 85.95 | 2.36 | 15.11 | 12.60 | 35.70 |
| 9 | 0.581 | 3470.55 | 87.91 | 3.92 | 14.60 | 13.04 | 61.76 |
| 10 | 0.564 | 3308.06 | 94.42 | 3.48 | 14.74 | 12.75 | 53.20 |
| 11 | 0.627 | 3502.86 | 82.94 | 4.20 | 15.10 | 12.56 | 63.54 |
| 12 | 0.627 | 3571.25 | 92.97 | 3.85 | 14.95 | 13.04 | 60.52 |
| 13 | 0.451 | 2590.90 | 81.58 | 3.07 | 14.88 | 12.44 | 45.84 |
| 14 | 0.615 | 3534.12 | 84.57 | 4.18 | 14.88 | 12.54 | 63.28 |
| 15 | 0.612 | 3383.59 | 78.08 | 4.35 | 15.17 | 12.00 | 62.64 |
| 16 | 0.708 | 3813.43 | 86.45 | 4.54 | 15.38 | 12.67 | 69.26 |
| 17 | 0.635 | 3937.08 | 94.45 | 4.21 | 14.33 | 12.62 | 63.74 |
| 18 | 0.504 | 3158.03 | 79.25 | 4.09 | 14.25 | 12.24 | 60.06 |
| 19 | 0.411 | 2501.31 | 89.70 | 2.68 | 14.46 | 12.33 | 39.90 |
| Median | 0.564 | 3158.03 | 85.59 | 3.64 | 14.95 | 12.57 | 56.98 |
| Maximum | 0.708 | 3937.08 | 94.75 | 4.75 | 15.66 | 13.06 | 71.82 |
| Minimum | 0.365 | 1893.90 | 72.23 | 2.36 | 14.20 | 12.00 | 35.70 |

### EXAMPLE 8

Basaltic hyaloclastite raw mix with the chemical and crystal mineral composition shown in Example 4 above is placed into an electric induction melting furnace and melted at a temperature of 1335 °C. It is determined that the composition is sufficiently molten to start pulling fibers. No additional additives are used in the raw mix to create the melt composition. As the fiber stand is pulled through the bushings it is coated with an amine hardener Aradur^{®} 3475, (1,3-cyclohexanedimethanamine) from Huntsman Chemical Company. Continuous basalt fibers are pulled with a spindle motor on a spooling cylinder at a velocity run of 1650 m/min (meters/minute). Fibers are wound on a spool. Upon run completion fiber strands are removed from the bundle at random. A total of 20 specimens is selected and prepared and tested as described in the Example 4 above using the same equipment. The fiber stand diameter produced in this run is plus or minus 9 microns as shown in Table 10 below. The results of the tensile strength testing are shown in Table 10 below. This manner of producing the fibers shows improved tensile strength properties as the fiber strands are treated with the amine hardener even though the velocity rate is greatly increased and the fiber strand dimeter greatly reduced.

**TABLE 10 - Instron ASTM C1557-14 tensile strength results:**

| **Specimen** | **Maximum Force [N]** | **Tensile stress at Maximum Force [MPa]** | **Modulus (Automatic Young's) [Gpa]** | **Tensile stress (Displacement) at Break (Standard)%** | **Diameter [um]** | **Length [mm]** | **Time at Break (Standard) [s]** |
|---|---|---|---|---|---|---|---|
| 1 | 0.190 | 2749.80 | 76.03 | 3.31 | 9.38 | 12.47 | 49.78 |
| 2 | 0.099 | 1524.24 | 85.47 | 1.45 | 9.10 | 12.57 | 22.32 |
| 3 | 0.222 | 3391.61 | 89.00 | 3.63 | 9.12 | 12.00 | 52.42 |
| 4 | 0.205 | 3101.39 | 84.20 | 3.53 | 9.17 | 12.16 | 51.52 |
| 5 | 0.176 | 2592.45 | 89.55 | 2.63 | 9.31 | 12.40 | 39.44 |
| 6 | 0.246 | 3406.97 | 83.23 | 3.92 | 9.59 | 13.01 | 61.50 |
| 7 | 0.209 | 3256.50 | 92.90 | 3.29 | 9.05 | 12.75 | 50.66 |
| 8 | 0.240 | 3358.25 | 78.57 | 4.03 | 9.53 | 12.89 | 62.62 |
| 9 | 0.215 | 3156.00 | 84.72 | 3.52 | 9.31 | 12.84 | 54.66 |
| 10 | 0.185 | 2802.69 | 85.39 | 3.01 | 9.17 | 12.78 | 46.38 |
| 11 | 0.188 | 3461.80 | 93.71 | 3.39 | 8.32 | 12.38 | 50.68 |
| 12 | 0.231 | 3493.42 | 88.32 | 3.77 | 9.17 | 12.82 | 58.54 |
| 13 | 0.184 | 2968.51 | 78.52 | 3.38 | 8.89 | 12.00 | 48.72 |
| 14 | 0.217 | 3235.91 | 84.83 | 3.60 | 9.25 | 12.38 | 53.56 |
| 15 | 0.237 | 3578.65 | 84.40 | 3.94 | 9.18 | 13.09 | 62.12 |
| 16 | 0.211 | 3241.73 | 81.81 | 3.66 | 9.10 | 12.84 | 56.52 |
| 17 | 0.183 | 2806.69 | 86.92 | 3.14 | 9.10 | 12.70 | 48.20 |
| 18 | 0.197 | 3116.65 | 91.89 | 3.07 | 8.96 | 12.41 | 46.16 |
| 19 | 0.245 | 3648.07 | 88.40 | 4.00 | 9.24 | 12.67 | 61.10 |
| 20 | 0.261 | 4068.80 | 91.67 | 4.33 | 9.03 | 13.07 | 68.20 |
| Median | 0.210 | 3238.82 | 85.43 | 3.53 | 9.17 | 12.68 | 51.97 |
| Maximum | 0.261 | 4068.80 | 93.71 | 4.33 | 9.59 | 13.09 | 68.20 |
| Minimum | 0.099 | 1524.24 | 76.03 | 1.40 | 8.32 | 12.00 | 22.32 |

It should be understood, of course, that the foregoing relates only to certain disclosed embodiments of the present invention and that numerous modifications or alterations may be made therein without departing from the spirit and scope of the invention as set forth in the appended claims.

## Claims

1. A method comprising:
melting basaltic hyaloclastite or intermediate basaltic hyaloclastite, wherein the basaltic hyaloclastite or intermediate basaltic hyaloclastite is at least 20% by weight amorphous; and
extruding the molten material into a continuous fiber.

2. The method of Claim 1, wherein the basaltic hyaloclastite or intermediate basaltic hyaloclastite comprises approximately 30 to approximately 57 percent by weight SiO₂, approximately 10% to approximately 18% by weight Al₂O₃, approximately 8% to approximately 18% by weight Fe₂O₃, and approximately 4% to approximately 25% by weight CaO.

3. The method of Claim 2, wherein the sum of Al₂O₃ + Fe₂O₃ is approximately 20% to approximately 35% by weight, wherein the ratio between the Al₂O₃ and the Fe₂O₃ is approximately 0.75 and approximately 1.50 and the ratio between the SiO₂ and the sum of the Al₂O₃ + Fe₂O₃ is approximately 1.25 and approximately 2.25.

4. The method of Claim 1, wherein the basaltic hyaloclastite or intermediate basaltic hyaloclastite is approximately 30% to 100% by weight amorphous.

5. The method of Claim 1, wherein the basaltic hyaloclastite or intermediate basaltic hyaloclastite is approximately 50% to 100% by weight amorphous.

6. The method of Claim 1, wherein the basaltic hyaloclastite or intermediate basaltic hyaloclastite is approximately 80% to 100% by weight amorphous.

7. The method of Claim 1, wherein the portion of the basaltic hyaloclastite or intermediate basaltic hyaloclastite that is not in amorphous form is predominantly in microcrystalline form.

8. The method of Claim 1, wherein the basaltic hyaloclastite or intermediate basaltic hyaloclastite is substantially free of ferrite, hematite, magnetite, altered or weathered olivine or altered or weathered hornblende.

9. The method of Claim 1, wherein the basaltic hyaloclastite or intermediate basaltic hyaloclastite is substantially free of Fe₂O₃.

10. The method of Claim 1 where the molten material is at a temperature of approximately 1250 °C to 1450 °C.

11. The method of Claim 1 where the molten material has an amorphous content greater than approximately 80%.

12. The method of Claim 1, wherein the continuous fiber is treated with a binding agent during the extrusion process.

13. The method of Claim 1, wherein the continuous fiber diameter is approximately 4 microns to approximately 20 microns.

14. The method of Claim 1, wherein the continuous fiber strand comprises an amorphous content greater than approximately 80% by weight.
